# EUROPEAN PATENT SPECIFICATION

(11) **EP 0 393 509 B1**
(45) Date of publication and mention of the grant of the patent: **31.08.1994**
(21) Application number: 90107024.3
(22) Date of filing: 12.04.1990
(51) Int. Cl.: H04N 1/028

(54) **Cordless image scanner**
Netzunabhängiger Bildabtaster
Dispositif de balayage d'images indépendant du secteur

(30) Priority: 17.04.1989 JP 96962/89
(43) Date of publication of application: 24.10.1990
(73) Proprietor: OMRON CORPORATION, Kyoto 616 (JP)
(72) Inventor: Hayakawa, Tomohiko, c/o Omron Corporation, Nagaokakyo-City, Kyoto 617 (JP); Tashima, Toshihiro, c/o Omron Corporation, Nagaokakyo-City, Kyoto 617 (JP)
(74) Representative: WILHELMS, KILIAN & PARTNER Patentanwälte

(56) References cited:
- EP-A- 0 180 181
- EP-A- 0 272 633
- US-A- 4 639 790
- US-A- 4 707 747

## Description

This invention is related to an image scanner. More specifically, this invention relates to a cordless image scanner used for reading handwritten pictures or drawings.

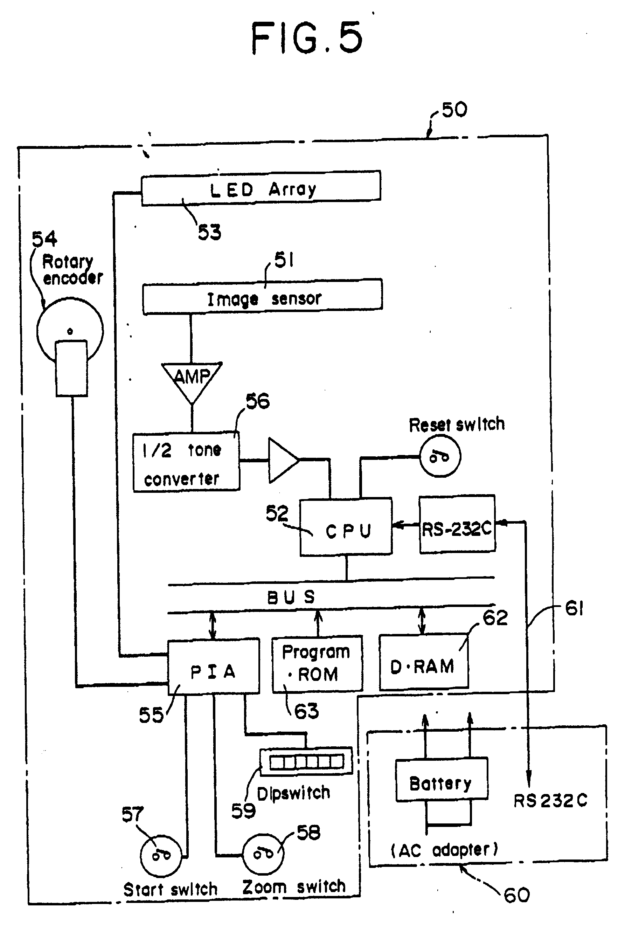

**Figs. 5-7** illustrate a conventional image scanner **50**. An image sensor **51** can read handwritten pictures or drawings. A binary means, which may be a half tone processor circuit **56**, converts the analog data accumulated by the image sensor **51** and transmits the converted data to a CPU **52**. The CPU **52** processes the data read by the image sensor **51** and then sends such data to a personal computer or a word processor, either of which constitutes a host computer **60**. The transmitted data is stored in the memory of the host **60** and displayed on its display screen **60a**.

LED array **53** is used as a light source and emits light onto the surface of a script to illustrate an image. A rotary encoder **54** defines the scope of image inputting by regulating the scope of the imaged picture. Controller or PIA (peripheral interface adapter) circuit **55** controls the LED **53** and the rotary encoder **54** and monitors the ratio of distance covered with respect to the light flashes emitted by the LED **53**. A start switch **57** is turned on when it desired to image data. A zoom switch **58** allows the image scanner **50** to have a zoom function for enlarging or contracting images. A dipswitch **59** is used for setting modes of the image scanner **50**. Finally, a programmed ROM **63** is used for compressing system data.

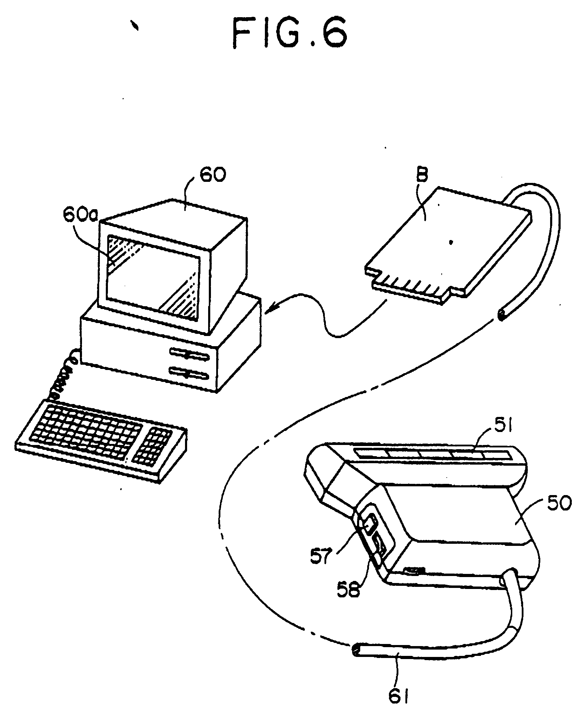

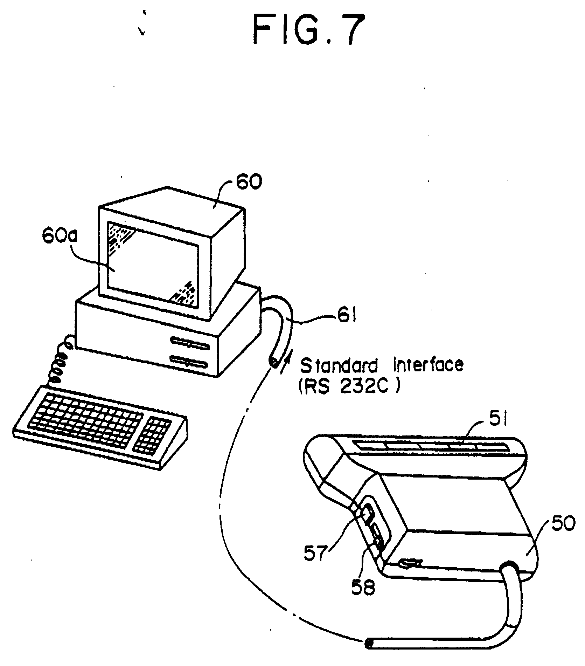

In **Fig. 6**, the image scanner **50** is linked to interface **B** by cable **61** and is detachably connected to a host computer **60** via the interface **B**. On the other hand, in **Fig. 7**, information is supplied through a cable **61** and a standard interface RS232C. In the conventional image scanner **50**, not only the display of stored image data but also the power supply are dependent upon host computer **60**. It is impossible to use the image scanner **50** by itself; the use of the image scanner **50** is limited to places providing a host computer **60**. Subsequently, handwritten drawings or pictures cannot be freely input everywhere.

Another drawback with the conventional image scanner **50** stems from the cable **61** which connects the host **60** to the image scanner **50**. When an operator inputs images from a script, for example, 100 images, the operator must grasp the image scanner **50** in his hand and slidably move the image scanner **50** across the script for each image. This movement is not only hindered by the tension in the cable **61** but also such hindrance may induce distortion in the images produced.

A hand scanner according to the preamble of claim 1 is known from EP-A- 0 180 181.

In view of the above-mentioned problems, a primary object of this invention is to provide an image scanner that is operable anywhere; an image scanner that is not limited by place, i.e. a place that has a host computer.

Another object of this invention is to provide a cordless image scanner. By providing such a cordless image scanner, not only operation but also the function of data processing can be improved as the problems resulting from a high tension cable will be eliminated.

Yet another object of this invention is to provide a portable image scanner. A portable image scanner would increase the desirability of an image scanner because of added convenience to an operator. For example, a large image scanner would not be very convenient to carry around even if it was capable of operating anywhere without being hooked up to a host computer. Accordingly, the image scanner according to this invention has a card-shaped construction that is both small and lightweight.

In order to realize these foregoing objects, the image scanner according to the invention is as defined in claim 1.

Other objects and advantages of this invention will become apparent from the following description and accompanying drawings, in which :

**Fig. 1** is a perspective view of a cordless image scanner according to an embodiment of this invention.

**Fig. 2(a)** illustrates the manner in which data is imaged in an embodiment of this invention.

**Fig. 2(b)** is a bottom view of the image scanner of this invention.

**Fig. 3** is a block diagram of an image scanner according to an embodiment of this invention.

**Fig. 4** is a perspective view illustrating the manner in which data can be communicated from the image scanner of this invention to a host.

**Fig. 5** is a block diagram of a conventional image scanner.

**Fig. 6** shows a manner in which data is communicated to a host from a conventional image scanner.

**Fig. 7** shows another manner in which data is communicated to a host from a conventional image scanner.

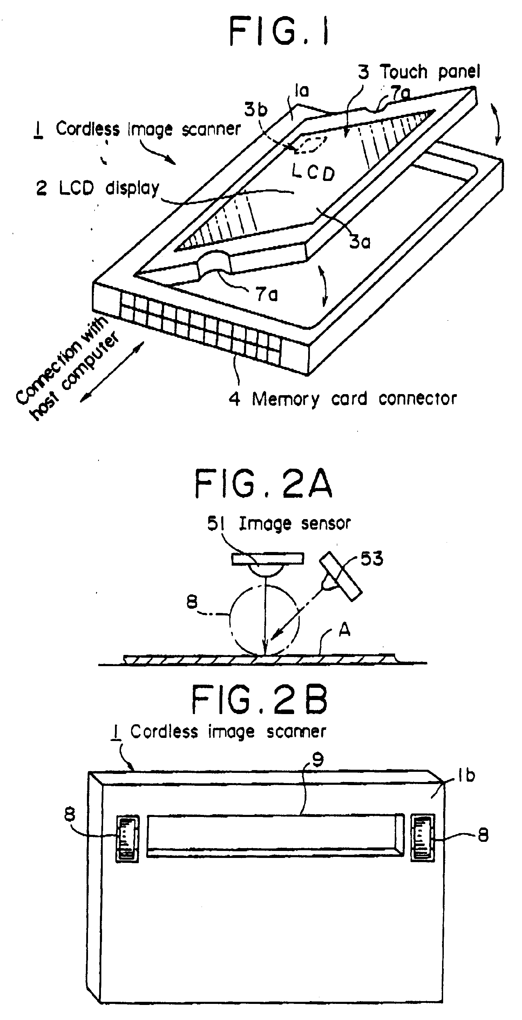

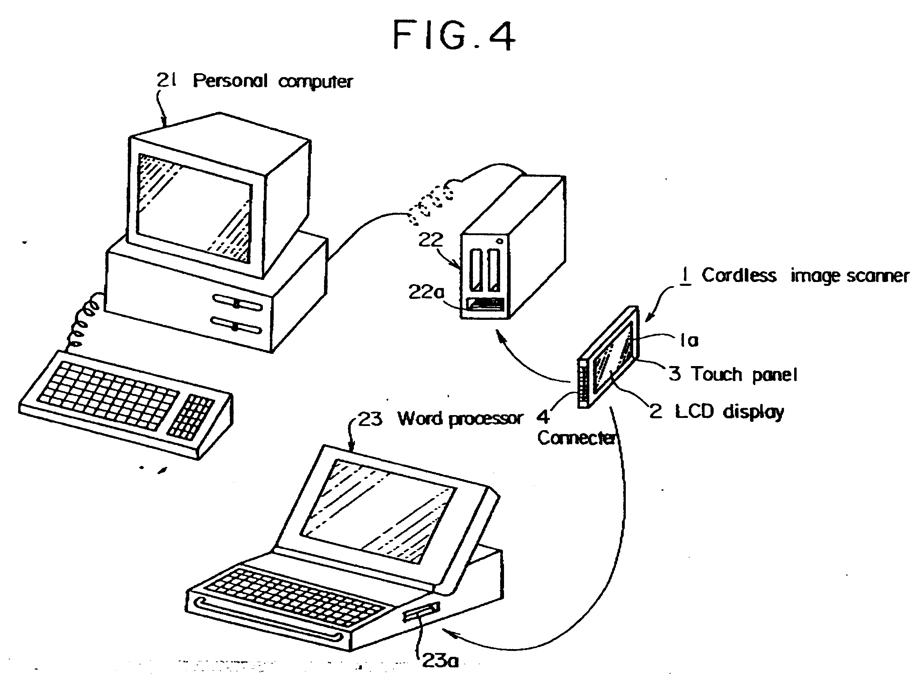

**Figs. 1-4** illustrate an embodiment of an image scanner according to this invention. The same parts have the same number as in the conventional drawings, **Figs. 5-7**. Thus, an image scanner **1** of this invention has an image sensor **51**. An image data inputting means inputs needed image data from a script **A** bearing needed pictures or drawings. A D RAM (dynamic RAM) **62** serves as a reading buffer for reading input image data. A CPU **52** controls the various parts and processes information. An LCD **2** displays images scanned. A touch panel **3** is provided for changing function modes. A connector portion **4** can be a card edge type connecter or a two piece type connecter and is used for data communication and transmission. Thus, image data can be communicated to a host without using a cord. Additionally, the connector portion **4** also enables the image scanner **1** to be used as a memory card capable of communicating information from one host to another or to be used as an extra memory for a host. A S RAM (static RAM) **5** stores image data after the data is processed by the CPU **52** and before the data is transmitted to a host. Finally, a paper battery **11** is used as a power source. Consequently, the paper battery **11** in combination with the connector portion **4** enable the construction of a self-contained cordless apparatus. And, as can be seen in **Fig. 4,** the apparatus is thin and, due to the paper batter **11**, portable.

As demonstrated by the arrows in **Fig. 1**, the touch panel **3** has a construction that enables it to be stood up in the direction of the upper front side **1a**. Furthermore, the touch panel **3** has handles **7a** for easy lifting. An array of transparent electrodes **3a** are provided as a touch panel **3** input means and are located on the outer portion of LCD **2**. For example, if the operator depresses switch portion **3b** on the touch panel **3a**, then the function mode is changed and image data input from the image sensor **51** is displayed on the LCD **2**.

As shown in **Figs. 2(a)** **and** **2(b)**, encoder rollers **8** which are used for detecting distance are located on both sides of a read out window **9** on the backside **1b** of the image scanner **1**. By moving the encoder roller **8** along the script **A** bearing pictures or drawings while illuminating the image with light emitted from the light source **53**, image data can be input through the read out window **9** to the image sensor **51**.

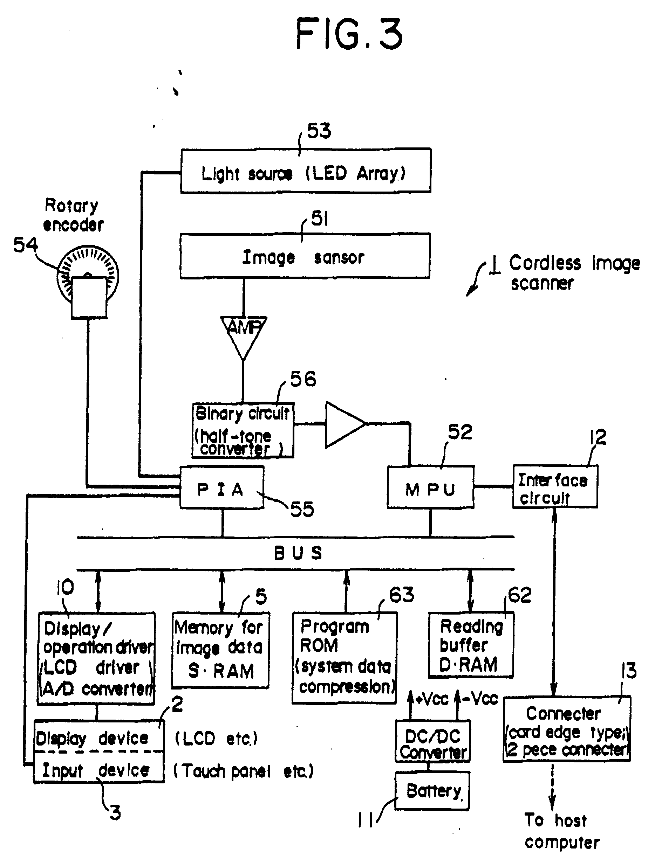

The source of power and means of communicating stored image data to a host can be seen in **Fig. 3**. A driver circuit **10** is used for display and operation while the paper battery **11** is used as the power supply. An interface circuit **12** is used for data transmission. A connector **13** can be a card edged type or a two piece type and is disposed in the connector portion **4**.

**Fig. 4** shows an embodiment of this image scanner **1**. The image scanner **1** is either inserted into the card insertion portion **22a** of disc driver **22** of a personal computer **21** or it is inserted into a card insertion portion **23a** of a word processor **23**. This action initiates data communication and the image data of script **A** is displayed on the screen of either the personal computer **21** or word processor **23**. Consequently, it is possible to modify the displayed image data and store such data in the memory of the personal computer **21** or word processor **23** as well as in the S RAM **5** of the image scanner 1. Furthermore, the image scanner 1 can be used alone and only linked to a host when data is desired to be transferred.

Now describing an operation of recording a picture or drawing with the image scanner 1, an operator first stands up the touch panel **3** by grasping the handle portions **7a**. Next, the operator presses switch portion **3b** to enable viewing of the image data to be recorded. To record the data, the operator slides the encoder rollers **8** over the script **A**. The image sensor **51** records image data through the read out window **9** and sends the data to be temporarily stored in the D RAM **62**, which acts as a buffer memory while the CPU **52** processes the information. The processed data is then transmitted through the busline where the programmed ROM **63** compresses such data to enable storing in the S RAM **5**.

As shown in **Fig. 4**, when the operator wants to transmit the recorded data to a host, like the personal computer **21** or the word processor **23**, connector portion **4** of the image scanner **1** is inserted into the card insertion portion **21a** or **23a** respectively. Thus, information can be conveniently recorded at any time and communicated to a host only when necessary.

The above descriptions and accompanying drawings are merely illustrative of the applications of the principles of the present invention and are not limiting. Many other embodiments falling under the scope of this invention may be devised by those skilled in the art. Accordingly, this invention is only limited by the scope of the appended claims.

## Claims

1. An image scanner comprising:
input means for inputting image data;
reading means for enabling said input means to input image data;
data storing means for storing image data input through said input means and reading means;
display means for displaying data input through said input means;
processing means connected to said input means, and display means for causing said display means to display input image data;
power supply means for supplying electrical power;
communication means for transmitting the stored image data to a host computer; characterized by
a common card-shaped housing for supporting said input means, reading means, data storing means, display means, processing means, power supply means and communication means, said housing being user graspable and having a generally planar configuration with substantially coextensive upper and lower surfaces, the planar area of each of said upper and lower surfaces being greater than that of said side edges, the lower surface of said housing including a read out window through which image data is input to said input means, the upper surface of said housing supporting said display means, said display means being pivotally mounted to said housing for raising said display means by rotation relative to said housing from a first position where said display means forms a substantially planar upper surface of said housing to a second upstanding position.

2. An image scanner according to claim 1, wherein said input means comprises an image sensor (51).

3. An image scanner according to claim 2, wherein said reading means comprises:
rotary encoders (54) for rolling said image scanner across a script;
a LED (53) for illuminating the script; and
a read out window (9) located between said rotary encoders (54), through which said image sensor (51) reads image data.

4. An image scanner according to anyone of the preceding claims, wherein said display means is a touch panel (3) comprising:
handles (7a) for standing up said touch panel;
a LCD display (2) for displaying image data; and
transparent electrodes (3a) located on said LCD display (2), wherein said transparent electrodes (3a) comprise a function mode input means.

5. An image scanner according to anyone of the preceding claims, wherein said power supply means comprises a paper battery (11).

6. An image scanner according to anyone of the preceding claims, wherein said communication means comprises a connecter (4) which can be connected to a personal computer or a word processor.

7. An image scanner according to claim 6, wherein said connecter (4) is a card edge type connecter.

8. An image scanner according to claim 6, wherein said connecter (4) is a two piece type connecter.

## Patentansprüche

1. Bildabtaster mit
Eingabemitteln zum Eingeben von Bilddaten,
Lesemitteln zum Befähigen der Eingabemittel, Bilddaten einzugeben,
Datenspeichermittel zum Speichern von über die Eingabemittel und Lesemittel eingegebenen Bilddaten,
Anzeigemittel zum Anzeigen von über die Eingabemittel eingegebenen Daten,
mit den Eingabemitteln und Anzeigemitteln verbundenen Verarbeitungsmitteln zum Bewirken, daß die Anzeigemittel eingegebene Bilddaten anzeigen,
Spannungsversorgungsmitteln zum Zuführen elektrischer Spannung,
Kommunikationsmittel zum Übertragen der gespeicherten Bilddaten auf einen Host-Rechner, gekennzeichnet durch
ein gemeinsames kartenförmiges Gehäuse zur Halterung der Eingabemittel, Lesemittel, Datenspeichermittel, Anzeigemittel, Verarbeitungsmittel, Spannungsversorgungsmittel und Kommunikationsmittel, wobei das Gehäuse vom Benutzer greifbar ist und einen allgemeinen planaren Aufbau mit im wesentlichen sich gemeinsam erstreckenden Ober- und Unterseiten aufweist, wobei der planare Bereich von Ober- und Unterseite jeweils größer als derjenige der Seitenränder ist, die Unterseite des Gehäuses ein Auslesefenster enthält, durch welches Bilddaten den Eingabemitteln eingegeben werden, die Oberseite des Gehäuses die Anzeigemittel trägt, die Anzeigemittel zum Anheben der Anzeigemittel durch Drehung in Bezug auf das Gehäuse aus einer ersten Stellung, in der die Anzeigemittel eine im wesentlichen planare Oberseite des Gehäuses bilden, in eine zweite hochstehende Stellung schwenkbar am Gehäuse angebracht sind.

2. Bildabtaster nach Anspruch 1, bei welchem die Eingabemittel einen Bildsensor (51) aufweisen.

3. Bildabtaster nach Anspruch 2, bei welchem die Lesemittel
Drehcodierer (54) zum Rollen des Bildabtasters über ein Manuskript,
eine Leuchtdiode (53) zum Beleuchten des Manuskripts, und
ein zwischen den Drehcodierern (54) angeordnetes Auslesefenster (9), durch welches der Bildsensor (51) Bilddaten liest, aufweisen.

4. Bildabtaster nach irgendeinem der vorstehenden Ansprüche, bei welchem die Anzeigemittel ein Berührfeld (3) mit
Griffen (7a) zum Hochstellen des Berührfelds,
einer Flüssigkristallanzeige (2) zum Anzeigen von Bilddaten, und
transparenten Elektroden (3a), die auf der Flüssigkristallanzeige (2) angeordnet sind, wobei die transparenten Elektroden (3a) Funktionsweiseneingabemittel aufweisen.

5. Bildabtaster nach irgendeinem der vorstehenden Ansprüche, wobei die Spannungsversorgungsmittel eine Papierbatterie (11) aufweisen.

6. Bildabtaster nach irgendeinem der vorstehenden Ansprüche, wobei die Kommunikationsmittel einen Stecker (4) aufweisen, der mit einem Personal-Computer oder einem Wortprozessor verbunden werden kann.

7. Bildabtaster nach Anspruch 6, wobei der Stecker ein Federleistenstecker ist.

8. Bildabtaster nach Anspruch 6, wobei der Stecker (4) ein zweiteiliger Stecker ist.

## Revendications

1. Dispositif de balayage d'image comportant :
un moyen d'entrée pour l'entrée de données d'image ;
un moyen de lecture pour permettre audit moyen d'entrée d'entrer des données d'image ;
un moyen de mémorisation de données pour mémoriser des données d'image entrées par ledit moyen d'entrée et par ledit moyen de lecture ;
un moyen d'affichage pour afficher des données entrées par le moyen d'entrée ;
un moyen de traitement relié audit moyen d'entrée et au moyen d'affichage pour que ledit moyen d'affichage affiche des données d'image entrées ;
un moyen d'alimentation en énergie pour alimenter en énergie électrique ;
un moyen de communication pour transmettre les données d'image mémorisées à un ordinateur principal ; caractérisé par
un boîtier commun en forme de carte pour supporter ledit moyen d'entrée, ledit moyen de lecture, ledit moyen de mémorisation de données, ledit moyen d'affichage, ledit moyen de traitement, ledit moyen d'alimentation en énergie et ledit moyen de communication, ledit boîtier étant saisissable par un utilisateur et présentant une configuration de forme générale plane avec des surfaces supérieure et inférieure sensiblement de même étendue, la superficie plane de chacune des surfaces supérieure et inférieure étant supérieure à celle des bords latéraux, la surface inférieure dudit boîtier comportant une fenêtre de lecture à travers laquelle des données d'image sont entrées dans ledit moyen d'entrée, la surface supérieure du boîtier supportant ledit moyen d'affichage, ledit moyen d'affichage étant monté pivotant sur ledit boîtier pour permettre de relever ledit moyen d'affichage par rotation par rapport au boîtier à partir d'une première position où ledit moyen d'affichage réalise une surface supérieure sensiblement plane dudit boîtier, et une deuxième position relevée.

2. Un dispositif de balayage d'image selon la revendication 1, dans lequel ledit moyen d'entrée comporte un lecteur d'image (51).

3. Un dispositif de balayage d'image selon la revendication 2, dans lequel ledit moyen de lecture comporte :
des enregistreurs rotatifs (54) pour faire rouler ledit dispositif de balayage d'image sur un original ;
une diode électroluminescente (53) pour illuminer cet original ; et
une fenêtre de lecture (9) disposée entre lesdits enregistreurs rotatifs (54), par laquelle le lecteur d'image (51) lit des données d'image.

4. Un dispositif de balayage d'image selon l'une quelconque des revendications précédentes, dans lequel le moyen d'affichage est un panneau tactile comportant :
des éléments de manipulation (7a) pour relever ledit panneau tactile ;
un affichage à cristaux liquides (2) pour afficher des données d'image ; et
des électrodes transparentes (3a) disposées sur ledit affichage a cristaux liquides (2), dans lequel lesdites électrodes transparentes (3a) comportent des moyens d'entrée de mode de fonctionnement.

5. Un dispositif de balayage d'image selon l'une quelconque des revendications précédentes, caractérisé en ce que ledit moyen d'alimentation en énergie comporte une batterie papier (11).

6. Un dispositif de balayage d'image selon l'une quelconque des revendications précédentes, dans lequel ledit moyen de communication comporte un connecteur (4) qui peut être relié à un ordinateur personnel ou à une unité de traitement de mots.

7. Un dispositif de balayage d'image selon la revendication 6, dans lequel le connecteur (4) est un connecteur de type pour bord de carte.

8. un dispositif de balayage d'image selon la revendication 6, dans lequel ledit connecteur (4) est un connecteur de type en deux pièces.
